# EUROPEAN PATENT SPECIFICATION

(11) **EP 3 864 463 B1**
(45) Date of publication and mention of the grant of the patent: **15.07.2026**
(21) Application number: 19783296.7
(22) Date of filing: 04.10.2019
(51) Int. Cl.: G02C 7/02, B29D 11/00, B33Y 10/00, B29C 64/106, B33Y 80/00

(54) **A METHOD AND A SYSTEM FOR MANUFACTURING AN OPTICAL LENS**
VERFAHREN UND SYSTEM ZUR HERSTELLUNG EINER OPTISCHEN LINSE
PROCÉDÉ ET SYSTÈME DE FABRICATION D'UNE LENTILLE OPTIQUE

(30) Priority: 08.10.2018 EP 18306326
(43) Date of publication of application: 18.08.2021
(73) Proprietor: ESSILOR INTERNATIONAL, 94220 Charenton-Le-Pont (FR)
(72) Inventor: BAUDART, Thierry, 94220 CHARENTON LE PONT (FR); THEODET, Manuel, 94220 CHARENTON LE PONT (FR)
(74) Representative: Jacobacci & Partners France
(86) International application number: PCT/EP2019/076897
(87) International publication number: WO 2020/074381

(56) References cited:
- US-A1- 2015 276 987
- US-A1- 2016 114 542
- US-A1- 2016 124 246

## Description

### TECHNICAL FIELD OF THE INVENTION

The invention relates to the manufacture of optical lenses.

More precisely the invention relates to a method and a system for manufacturing an optical lens.

### BACKGROUND INFORMATION AND PRIOR ART

Manufacturing an optical lens meant to provide a given correction of ametropia conventionally involves defining the geometry of the optical lens to be produced based on the correction sought and the design of the frame selected by the wearer, producing an intermediate optical element (*e.g*. by molding) and machining the intermediate optical element to fit the geometry previously defined and the selected frame.

It has been proposed more recently to manufacture an optical lens using an additive manufacturing technology.

Using additive manufacturing technology to manufacture an optical lens is of interest because the obtained optical lens may directly be shaped to fit the frame that shall carry it and/or the obtained optical lens complies with the wearer's ophthalmic prescription. Prior art discussing additive manufacturing of spectacle lenses can be found in US 2015/276987 A1 and US 2016/124246 A1.

### SUMMARY OF THE INVENTION

This invention is defined in the claims.

The manufactured optical lens can thus effectively correspond to the sought shape and provide the required correction, in particular.

Additive manufacturing is a manufacturing technique defined in international standard ASTM 2792-12 and designates a process for assembling elements of material to obtain a solid three-dimensional object on the basis of a digital three-dimensional model (typically represented by data of a CAD file, CAD standing for *"Computer-Aided Design*").

Such a process is sometimes referred to as 3-D printing or material printing because successive elements (*e.g*. layers) of materials may be deposited in succession one on the precedent. The layers, which correspond to virtual cross sections extracted from the three-dimensional model, are assembled and fused in order to form the solid three-dimensional object, here an optical part comprising an ophthalmic lens and a holder.

The expression *"additive manufacturing"* especially designates processes that create solid objects by juxtaposing volume elements or voxels. The term *"juxtaposing"* is understood to mean sequential operations, for example especially deposition of a layer on the precedent, or the deposition of a voxel making contact with or nearby a voxel deposited beforehand.

Moreover, the term "*voxel*" is understood to mean an individual element that, in combination with other voxels, defines an intermediate element, a layer for example. The term "*voxel*" may also apply to an intermediate element, for example a layer, in particular when stereolithography techniques are used.

Thus, depending on the additive manufacturing technique used, the optical lens will possibly be produced voxel by voxel, line by line or layer by layer.

The additive manufacturing method used may be selected in, but is not limited to, the list consisting of inkjet printing, stereolithography, mask stereolithography or mask projection stereolithography, polymer jetting, scanning laser sintering (SLS), scanning laser melting (SLM,) and fused deposition modeling (FDM).

Optional features of the method presented above are as follows:
- said equipment is the manufacturing machine;
- the process data defines a material used during said additive manufacturing method;
- said optical data includes prescription data defining at least a refraction provided by the optical lens;
- said optical data includes data defining a type of the optical lens (for instance among a single vision type, a progressive type, a multifocal type);
- said manufacturing data includes data usable by the additive manufacturing machine for producing the optical lens;
- said manufacturing data includes data usable for verifying at least one parameter of the manufactured optical lens;
- the method comprises a step of storing the optical data and the manufacturing data in a single set of data.

According to a first possible embodiment, the step of determining manufacturing data comprises the followings sub-steps:
- determining a geometry of said optical lens based on said optical data;
- determining said manufacturing data based on said geometry and on said process data.

According to a second possible embodiment, the step of determining manufacturing data includes a sub-step of retrieving at least a portion of said manufacturing data in a database associating said portion of manufacturing data to said optical data and to said process data.

The proposed method may further comprise a step of receiving frame data representing a shape of a frame for carrying the optical lens; said manufacturing data may then be determined partly based on said frame data. In the case mentioned above where the geometry of said optical lens is determined, the geometry of said optical lens may for instance be determined based on said optical data and on said frame data.

The invention also proposes a system for manufacturing an optical lens, comprising:
- a communication circuit for receiving optical data representing at least a characteristic of an optical correction provided by the optical lens, and process data representing at least one characteristic of an additive manufacturing method used to manufacture the optical lens, the process data defining at least an equipment involved in said additive manufacturing method;
- at least one processing unit adapted to determine manufacturing data based on said optical data and on said process data, wherein said manufacturing data is usable by an additive manufacturing machine implementing said additive manufacturing method; and
- the additive manufacturing machine adapted to use said manufacturing data to manufacture the optical lens by said additive manufacturing method.

### DETAILED DESCRIPTION OF EXAMPLE(S)

The following description, given with regard to the appended drawings, which are given by way of non-limiting examples, will allow what the invention consists of and how it can be carried out to be better understood.

In the appended drawings:
- Figure 1 shows an exemplary manufacturing system adapted to manufacture an optical lens according to the invention; and
- Figure 2 shows possible steps of a method for manufacturing an optical lens according to the invention.

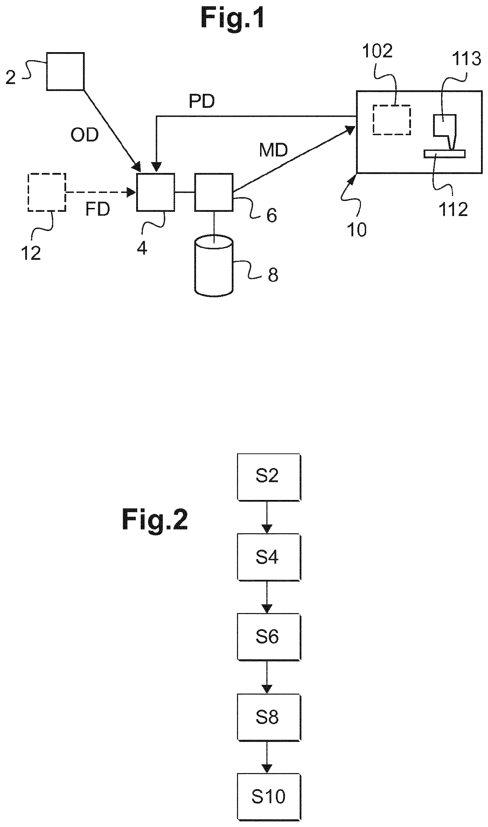

The system shown in Figure 1 comprises an ECP device 2 (where ECP stands for *"Eye Care Practitioner*"), a communication circuit 4, a processing unit 6, a storage unit 8 and an additive manufacturing machine 10.

As shown in dotted lines and further explained below, the system of Figure 1 may also include a frame designer device 12.

The system of Figure 1 aims at manufacturing an optical lens (here an ophthalmic lens) as explained below.

The ECP device 2 is an electronic device, such as a computer (for instance a personal computer or a tablet computer), located for instance in the premises of an eye care practitioner and meant to store (at least temporarily) optical data OD representing characteristics of the optical correction that should be provided by the optical lens to be manufactured.

Such characteristics of the sought optical correction include for instance prescription data defining at least a refraction provided by the optical lens, such as a spherical refractive power and/or a cylindrical refractive power and/or a cylinder axis of the cylindrical correction.

Optical data OD may also include further data defining the lens to be manufactured, such as:
- data defining the type of the lens to be manufactured (*e.g*. among a single vision type, a progressive type, a multifocal type);
- data defining design characteristics of the lens to be manufactured, such as whether the lens is spherical or aspherical for a single vision lens, a distribution of residual spherical power and/or unwanted astigmatism for a progressive addition lens, a type of the lens (bifocal, trifocal, segment type) and a size of the addition area for a multifocal lens.

Optical data OD are for instance determined based on a prescription made by an ophthalmologist (after examination of the eyes of the future wearer of the lens to be manufactured) and/or entered in the ECP device 2 (to be at least temporarily stored therein) via a user interface of the ECP device 2.

Optical data OD may also include data defining a frame intended to carry the optical lens to be manufactured (as well as conditions of mounting the optical lens in the frame, possibly).

Such data defining the frame (or frame data FD) may include for instance a reference number identifying the frame and/or data representative of the design of at least part of the frame (such as data defining a 3D representation of the concerned frame).

The frame just mentioned may for instance have been chosen beforehand in the ECP premises by the future wearer of the optical lens to be manufactured.

According to a possible variation (represented in dotted lines in Figure 1), at least part of the data defining the frame FD may be stored (at least temporarily) in the frame designer device 12.

The additive manufacturing machine 10 comprises a control unit 102, at least one nozzle 113 and a manufacturing supporting member 112 on which the optical lens will be manufactured by means of an additive manufacturing method.

The manufacturing supporting member 112 comprises a body provided with a manufacturing surface that has an overall geometry, all or some of which is independent or dependent on the geometry of at least one surface of the optical lens to be produced by additive manufacturing. In the example described here, the manufacturing surface is flat; as a variant, it could for example be convex or concave.

The nozzle 113 is controlled by the control unit 102 so as to be moved by actuators and to deliver elementary volumes (or voxels) of a material that will form, after an optional additional treatment (such as a photo-polymerization step), elementary portions of the optical lens being manufactured.

The control unit 102 is provided with a data processing system, especially comprising a microprocessor and a (*e.g*. non-volatile) memory (here a read-only memory or ROM integrated). Such a memory stores computer program instructions (forming a software) which, when executed by the microprocessor, allows the additive manufacturing machine 10 to be controlled and thus the additive manufacturing method to be implemented.

The control unit 102 furthermore comprises a modifiable memory, here a volatile random access memory (RAM), in which the data used during the execution of the software and implementation of the additive manufacturing method are stored.

As a variant, the non-volatile memory and/or the modifiable memory could be a rewritable non-volatile memory, for example an electrically erasable programmable read-only memory (EEPROM).

When producing the optical lens, the modifiable memory especially stores corresponding manufacturing data MD, as further described below.

The invention is not limited to a particular location of the additive manufacturing machine 10.

For instance, as schematically shown in Figure 1, the additive manufacturing machine 10 could be located in premises distinct from the ECP premises and from a location of the processing unit 6.

According to a possible variation, the additive manufacturing machine 10 and the processing unit 6 could be located in the same building.

According to yet another solution the additive manufacturing machine 10 could be located in the ECP premises.

The communication circuit 4 is adapted to establish a connection with the OCP device 2 (for instance a remote connection using a wide area network such as the Internet) so as to exchange data with the ECP device 2.

The communication circuit 4 may thus receive the optical data OD mentioned above from the ECP device 2.

The communication circuit 4 is also adapted to establish a connection with the frame designer device 12 (for instance a remote connection using a wide area network such as the Internet) so as to exchange data with the frame designer device 12.

The communication circuit 4 may thus receive at least part of the data defining the frame FD from the frame designer device 2.

The communication circuit 4 is also adapted to establish a connection with the additive manufacturing machine 10 (for instance using a wide area network or a local area network depending of the location of the additive manufacturing machine 10 with respect the communication circuit 4) so as to exchange data with the additive manufacturing machine 10.

The communication circuit 4 receives - as claimed - from the additive manufacturing machine 10, process data PD representing at least one characteristic of an additive manufacturing method used (by the additive manufacturing machine 10) to manufacture the optical lens.

Such process data PD may include for instance:
- data indicative of the type of additive manufacturing implemented by the additive manufacturing machine 10 (for instance among the following types: inkjet printing, stereolithography, mask stereolithography or mask projection stereolithography, polymer jetting, scanning laser sintering, scanning laser melting and fused deposition modeling);
- data indicative of capabilities or specificities of the additive manufacturing machine 10 (such as the maximum light intensity, the irradiation wavelength, the size of the building area);
- data indicative of materials possibly used by the additive manufacturing machine 10 to implement the additive manufacturing method and data indicative of characteristics of each of these materials (such as, for a given material, its provider, its reactivity, its thermo-mechanical properties, its refractive index, its shrinkage, its viscosity and its wettability).

The processing unit 6 (for instance a microcontroller) is connected to the communication circuit 4 and has therefore access to the data received by the communication circuit 4 has just explained. The processing unit 6 and the communication circuit 4 may be part of the same electronic device (and in this case connected together via an internal bus of this electronic device), for instance. According to a possible variation, the processing unit 6 and the communication circuit 4 may be part of the same local area network and can this exchange data over this local area network.

The processing unit 6 is adapted to determine manufacturing data MD based on the optical data OD and on the process data PD received by the communication circuit 4. The determined manufacturing data MD will then be usable by the additive manufacturing machine 10, as already noted above and further explained below.

Such determined manufacturing data MD includes for instance:
- data defining layers deposited by the additive manufacturing machine 10 (precisely by said at least one nozzle 113) to form the optical lens, such as the number of these layers and the size of these layers;
- data defining the material(s) used to produce the optical lens and possibly the properties of this material (such as its provider and/or its reactivity and/or its thermo-mechanical properties and/or its refractive index and/or its shrinkage and/or its viscosity and/or its wettability);
- characteristics of a carrier (when using a build over technology);
- quantity of material to be removed and/or the type of post-printing treatment such as machining, polishing or edging (when using an additive-subtractive process).

Examples of how the manufacturing data MD may be determined are given below with reference to Figure 2 (step S6).

The optical data OD and the manufacturing data MD may be stored (for instance in the storage unit 8) in a single set of data, for instance in a single file.

As schematically represented in Figure 1, the manufacturing data MD thus determined by the processing unit 6 are sent to the manufacturing machine 10. Although direct transmission to the additive manufacturing machine 10 is schematically shown in Figure 1, manufacturing data may in practice be transmitted to the additive manufacturing machine 10 via the communication circuit 4.

According to a possible embodiment, the single set of data defined above (including optical data OD and manufacturing data MD) is sent from the processing unit 6 to the manufacturing machine 10 (possibly via the communication circuit 4).

The single set of data just mentioned may thus include:
- data characteristic of the optical lens (such as the spherical refractive power and/or cylindrical refractive power of the optical lens, a type of the optical lens or a design of the optical lens);
- data defining the 3D lens shape;
- manufacturing data MD (such as the number and/or size of layers, the carrier type, the material used and its properties, as explained above).

The additive manufacturing machine 10 is adapted to receive the manufacturing data MD and to launch production of the optical lens by means of an additive manufacturing method defined based on the manufacturing data MD.

Figure 2 shows possible steps of a method for manufacturing an optical lens according to the invention. These steps are here implemented in the system described above with reference to Figure 1.

The method of Figure 2 starts with a step S2 of receiving optical data OD representing at least a characteristic of an optical correction provided by the optical lens to be manufactured. In the present example, step S2 is implemented by the communication circuit 4 associated with the processing unit 6.

Exemplary optical data OD are described above with reference to Figure 1.

As explained above, optical data OD may at least in part be received from the ECP device 2.

Part of the optical data OD (in particular data defining the frame FD) may be received from the frame designer device 12.

In practice, the processing unit 6 may receive (via the communication circuit 4) a reference number identifying the frame (selected by the wearer in the ECP premises) from the ECP device; this reference number may then be sent from the processing unit 6 (via the communication circuit 4) to the frame designer device 12, which sends in response to the processing unit 6 (via the communication circuit 4) data defining a 3D representation of the frame identified by this reference number.

The method of Figure 2 also includes a step S4 of receiving process data PD representing at least one characteristic of an additive manufacturing method used to manufacture the optical lens. The process data PD are here received by the communication circuit 4 and are thus accessible to the processing unit 6 associated with the communication circuit 4.

Process data PD is for instance transmitted by the additive manufacturing machine 10 that is designed to perform the additive manufacturing method used to manufacture the optical lens.

At least part of the process data PD is for instance descriptive of an equipment participating in the implementation of the additive manufacturing method (such as the manufacturing machine 10 itself). At least part of the process data PD may be descriptive of at least one material which may be used by the equipment just mentioned (*e.g*. the manufacturing machine 10) and of its properties (*e.g.* its provider and/or its reactivity and/or its thermo-mechanical properties and/or its refractive index and/or its shrinkage and/or its viscosity and/or its wettability).

The process of Figure 2 then includes a step S6 of determining, based on the optical data OD (possibly including frame data FD as mentioned above) and on the process data PD, manufacturing data MD usable by the additive manufacturing machine 10 implementing the additive manufacturing method.

As explained above with reference to Figure 1, these manufacturing data MD are in the present example determined (based on the optical data OD and on the process data OD) by the processing unit 6.

According to a first possible embodiment, the step S6 of determining manufacturing data MD comprises the followings sub-steps:
- determining a geometry of the optical lens (*e.g.* a 3D representation of the optical lens) based on the optical data OD (said geometry being possibly partly based on the above mentioned frame data FD);
- determining the manufacturing data MD based on this geometry and on the process data PD.

In this embodiment, a geometry of the optical lens is first determined by the processing unit 6 such that the optical lens having this geometry provides the optical correction defined in the optical data OD.

The processing unit 6 can then determine the manufacturing data MD which make it possible to obtain an optical lens having this geometry, taking into account the additive manufacturing method to be used as determined from the process data PD.

In particular, the processing unit 6 may thus select a printing strategy among the various possibilities defined in the process data PD. The printing strategy may for instance be selected to balance production time, cost and quality and/or based on records of former successful implementations of the additive manufacturing method concerned.

Based on the selected printing strategy, the processing unit 6 may determine parameters defining the additive manufacturing method best suited to produce an optical lens conforming to the determined geometry, taking into account (*i.e.* compensating for) known production drifts resulting from the selected printing strategy.

Parameters defining the additive manufacturing method include for instance the number and/or size of layers deposited by the additive manufacturing machine 10. Parameters defining the additive manufacturing method may also include the material selected by the processing unit 6 for producing the optical lens.

According to a second possible embodiment, the step S6 of determining the manufacturing data MD includes a sub-step of retrieving the manufacturing data MD in a database stored for instance in the storage unit 8 and associating this manufacturing data MD to said optical data OD and to said process data PD.

This database is for instance a large multi-entry table including, for each set of a large number of sets of possible optical parameters (corresponding to optical data OD) and for each set of a large number of sets of possible process parameters (corresponding to process data PD), a set of corresponding manufacturing parameters (corresponding to manufacturing data MD).

The optical parameters just mentioned are for instance a spherical refractive power and/or a cylindrical refractive power and/or a cylinder axis of the cylindrical correction, as explained above.

The process parameters just mentioned are for instance the type of the additive manufacturing method and the materials used in the additive manufacturing method.

The set of manufacturing parameters is for instance associated to a given set of optical parameters and to a given set of process parameters based on previous experiments or implementations of the additive manufacturing method defined by these process parameters.

As already indicated above, the manufacturing data MD just obtained and the optical data OD (received in step S2) may be stored in a single set of data (such as a single file), that can thus easily be used later as explained below.

At the end of step S6, this single set of data may be sent to the additive manufacturing machine 10 (possibly via the communication circuit 4).

The process of Figure 2 can then include for instance a step S8 of verifying at least one parameter of the optical lens.

This step S8 of verifying at least one parameter of the optical lens may be implemented by the processing unit 6 or by the additive manufacturing machine 10, for instance.

As claimed, step S8 includes estimating an effective refractive power of the optical lens to be manufactured (in a specific area of the lens or over the whole lens) using a ray tracing technique and a model of the optical lens to be manufactured, this model being defined by data included in the single set of data, such as data defining the 3D lens shape, data defining the number and the size of layers, data defining the material used (and its refractive index, as mentioned above).

Step S8 also includes, as claimed, comparing the estimated effective refractive power with a theoretical or desired refractive power, for instance as defined in the optical data OD. In particular, the estimated effective refractive power may be compared to a corresponding refractive power defined by prescription data, as mentioned above.

The comparison just mentioned may be used for instance to anticipate on the accuracy of the correction that may be provided by the optical lens to be manufactured, for instance to stop the current manufacturing process (and possibly use an alternative manufacturing process) in case the accuracy is not satisfactory.

In another embodiment, the result of the comparison may be used to modify the manufacturing data MD and estimate a new refractive power value based on the modified manufacturing data MD, until the comparison gives an acceptable result.

The process of Figure 2 also includes **-** as claimed - a step S10 of manufacturing the optical lens by means of the additive manufacturing machine 10 using data received in the single set of data, in particular the manufacturing data MD obtained in step S6 described above.

Precisely, some data among the manufacturing data MD (such as data defining the number and the size of layers) are directly usable by the additive manufacturing machine 10 to produce the optical lens.

In practice, the control unit 102 controls the nozzle 113 in accordance with data among the manufacturing data MD to thereby produce (*i.e.* print) the optical lens.

In view of the way the manufacturing data MD are determined (in step S6), the optical lens thus produced has the expected shape and optical properties.

A post-printing treatment (such as machining and/or polishing and/or edging) may in some case by performed on the printed optical lens (when using a additive-subtractive manufacturing technology).

## Claims

1. A method of manufacturing an optical lens, comprising the following steps:
- receiving (S2) optical data (OD) representing at least a characteristic of an optical correction provided by the optical lens;
- receiving (S4), from an additive manufacturing machine (10), process data (PD) representing at least one characteristic of an additive manufacturing method used to manufacture the optical lens, the process data (PD) defining at least the additive manufacturing machine (10) involved in said additive manufacturing method;
- based on said optical data (OD) and on said process data (PD), determining (S6) manufacturing data (MD) usable by the additive manufacturing machine (10) implementing said additive manufacturing method, said manufacturing data (MD) including data defining a number and size of layers, and data defining a material used;
- sending the manufacturing data (MD) to the additive manufacturing machine (10);
- estimating (S8) an effective refractive power of the optical lens using a ray tracing technique and a model of the lens defined by said data defining the number and size of the layers, and said data defining the material used;
- comparing (S8) the estimated effective refractive power with a refractive power defined in the optical data; and
- manufacturing (S10) the optical lens by means of said additive manufacturing machine (10) using said manufacturing data.

2. The method of claim 1, wherein the process data (PD) defines a material used during said additive manufacturing method.

3. The method of any of claims 1-2, wherein said optical data (OD) includes prescription data defining at least a refraction provided by the optical lens.

4. The method of any of claims 1-3, wherein said optical data (OD) includes data defining a type of the optical lens.

5. The method of any of claims 1-4, wherein said manufacturing data includes data usable by the additive manufacturing machine for producing the optical lens.

6. The method of any of claims 1-4, wherein said manufacturing data includes data usable for verifying at least one parameter of the manufactured optical lens.

7. The method of any of claims 1-6, comprising a step of storing the optical data (OD) and the manufacturing data (MD) in a single set of data.

8. The method of any of claims 1-7, wherein the step of determining manufacturing data comprises the followings sub-steps:
- determining a geometry of said optical lens based on said optical data (OD);
- determining said manufacturing data (MD) based on said geometry and on said process data (PD).

9. The method of any of claims 1-7, wherein the step of determining manufacturing data (MD) includes a sub-step of retrieving at least a portion of said manufacturing data (MD) in a database associating said portion of manufacturing data (MD) to said optical data (OD) and to said process data (PD).

10. The method of any of claims 1-9, further comprising a step of receiving frame data (FD) representing a shape of a frame for carrying the optical lens, wherein said manufacturing data (MD) is determined partly based on said frame data (FD).

11. The method of claim 10 taken as dependent upon claim 8, wherein the geometry of said optical lens is determined based on said optical data (OD) and on said frame data (FD).

12. A system for manufacturing an optical lens, comprising:
- a communication circuit (4) for receiving optical data (OD) representing at least a characteristic of an optical correction provided by the optical lens, and for receiving, from an additive manufacturing machine (10), process data (PD) representing at least one characteristic of an additive manufacturing method used to manufacture the optical lens, the process data (PD) defining at least the additive manufacturing machine (10) involved in said additive manufacturing method;
- at least one processing unit (6) adapted to determine manufacturing data (MD) based on said optical data (OD) and on said process data (PD), wherein the communication circuit (4) is configured to send the manufacturing data (MD) to the additive manufacturing machine (10), said manufacturing data (MD) including data defining a number and size of layers, and data defining a material used; and
- the additive manufacturing machine (10) adapted to use said manufacturing data to manufacture the optical lens by said additive manufacturing method,
the processing unit (6) or the additive manufacturing machine (10) being adapted to perform the following steps:
- estimating an effective refractive power of the optical lens using a ray tracing technique and a model of the lens defined by said data defining the number and size of the layers, and said data defining the material used;
- comparing the estimated effective refractive power with a refractive power defined in the optical data.

## Patentansprüche

1. Verfahren zur Herstellung einer optischen Linse, das die folgenden Schritte umfasst:
- Empfangen (S2) optischer Daten (OD), die mindestens eine Charakteristik einer durch die optische Linse bereitgestellten optischen Korrektur repräsentieren;
- Empfangen (S4), von einer additiven Herstellungsmaschine (10), von Prozessdaten (PD), die mindestens eine Charakteristik eines additiven Herstellungsverfahrens repräsentieren, das zur Herstellung der optischen Linse verwendet wird, wobei die Prozessdaten (PD) mindestens die additive Herstellungsmaschine (10) definieren, die an dem additiven Herstellungsverfahren beteiligt ist;
- Bestimmen (S6) von Herstellungsdaten (MD), die von der additiven Herstellungsmaschine (10), die das additive Herstellungsverfahren implementiert, verwendbar sind, basierend auf den optischen Daten (OD) und den Prozessdaten (PD), wobei die Herstellungsdaten (MD) Daten beinhalten, die eine Anzahl und Größe von Schichten definieren, und Daten, die ein verwendetes Material definieren;
- Senden der Herstellungsdaten (MD) an die additive Herstellungsmaschine (10);
- Schätzen (S8) einer effektiven Brechkraft der optischen Linse unter Verwendung einer Strahlverfolgungstechnik und eines Modells der Linse, das durch die Daten, die die Anzahl und Größe der Schichten definieren, und die Daten, die das verwendete Material definieren, definiert wird;
- Vergleichen (S8) der geschätzten effektiven Brechkraft mit einer Brechkraft, die in den optischen Daten definiert ist; und
- Herstellen (S10) der optischen Linse mittels der additiven Herstellungsmaschine (10) unter Verwendung der Herstellungsdaten.

2. Verfahren nach Anspruch 1, wobei die Prozessdaten (PD) ein Material definieren, das während des additiven Herstellungsverfahrens verwendet wird.

3. Verfahren nach einem der Ansprüche 1 bis 2, wobei die optischen Daten (OD) Rezeptdaten beinhalten, die mindestens eine durch die optische Linse bereitgestellte Brechung definieren.

4. Verfahren nach einem der Ansprüche 1-3, wobei die optischen Daten (OD) Daten beinhalten, die einen Typ der optischen Linse definieren.

5. Verfahren nach einem der Ansprüche 1-4, wobei die Herstellungsdaten Daten beinhalten, die durch die additive Herstellungsmaschine zum Herstellen der optischen Linse verwendbar sind.

6. Verfahren nach einem der Ansprüche 1-4, wobei die Herstellungsdaten Daten beinhalten, die zum Verifizieren mindestens eines Parameters der hergestellten optischen Linse verwendbar sind.

7. Verfahren nach einem der Ansprüche 1-6, umfassend einen Schritt des Speicherns der optischen Daten (OD) und der Herstellungsdaten (MD) in einem einzigen Satz von Daten.

8. Verfahren nach einem der Ansprüche 1-7, wobei der Schritt des Bestimmens von Herstellungsdaten die folgenden Teilschritte umfasst:
- Bestimmen einer Geometrie der optischen Linse basierend auf den optischen Daten (OD);
- Bestimmen der Herstellungsdaten (MD) basierend auf der Geometrie und auf den Prozessdaten (PD).

9. Verfahren nach einem der Ansprüche 1-7, wobei der Schritt des Bestimmens von Herstellungsdaten (MD) einen Unterschritt des Abrufens mindestens eines Teils der Herstellungsdaten (MD) in einer Datenbank beinhaltet, die den Teil der Herstellungsdaten (MD) den optischen Daten (OD) und den Prozessdaten (PD) zuordnet.

10. Verfahren nach einem der Ansprüche 1-9, ferner umfassend einen Schritt des Empfangens von Rahmendaten (FD), die eine Form eines Rahmens zum Tragen der optischen Linse repräsentieren, wobei die Herstellungsdaten (MD) teilweise basierend auf den Rahmendaten (FD) bestimmt werden.

11. Verfahren nach Anspruch 10 in Abhängigkeit von Anspruch 8, wobei die Geometrie der optischen Linse basierend auf den optischen Daten (OD) und den Rahmendaten (FD) bestimmt wird.

12. System zur Herstellung einer optischen Linse, das Folgendes umfasst:
- eine Kommunikationsschaltung (4) zum Empfangen optischer Daten (OD), die mindestens eine Charakteristik einer durch die optische Linse bereitgestellten optischen Korrektur repräsentieren, und zum Empfangen von Prozessdaten (PD), die mindestens eine Charakteristik eines additiven Herstellungsverfahrens repräsentieren, das zur Herstellung der optischen Linse verwendet wird, von einer additiven Herstellungsmaschine (10), wobei die Prozessdaten (PD) mindestens die additive Herstellungsmaschine (10) definieren, die an dem additiven Herstellungsverfahren beteiligt ist;
- mindestens eine Verarbeitungseinheit (6), die dazu ausgelegt ist, Herstellungsdaten (MD) basierend auf den optischen Daten (OD) und den Prozessdaten (PD) zu bestimmen, wobei die Kommunikationsschaltung (4) dazu ausgelegt ist, die Herstellungsdaten (MD) an die additive Herstellungsmaschine (10) zu senden, wobei die Herstellungsdaten (MD) Daten beinhalten, die eine Anzahl und Größe von Schichten definieren, und Daten, die ein verwendetes Material definieren; und
- die additive Herstellungsmaschine (10), die dazu ausgelegt ist, die Herstellungsdaten zur Herstellung der optischen Linse durch das additive Herstellungsverfahren zu verwenden,
wobei die Verarbeitungseinheit (6) oder die additive Herstellungsmaschine (10) dazu ausgelegt sind, die folgenden Schritte durchzuführen:
- Schätzen einer effektiven Brechkraft der optischen Linse unter Verwendung einer Strahlverfolgungstechnik und eines Modells der Linse, das durch die Daten, die die Anzahl und Größe der Schichten definieren, und die Daten, die das verwendete Material definieren, definiert wird;
- Vergleichen der geschätzten effektiven Brechkraft mit einer Brechkraft, die in den optischen Daten definiert ist.

## Revendications

1. Procédé de fabrication d'une lentille optique, comprenant les étapes suivantes :
- la réception (S2) de données optiques (OD) représentant au moins une caractéristique d'une correction optique apportée par la lentille optique ;
- la réception (S4) en provenance d'une machine de fabrication additive (10) de données de procédé (PD) représentant au moins une caractéristique d'un procédé de fabrication additive utilisé pour fabriquer la lentille optique, les données de procédé (PD) définissant au moins la machine de fabrication additive (10) intervenant dans ledit procédé de fabrication additive ;
- sur la base desdites données optiques (OD) et desdites données de procédé (PD), la détermination (S6) de données de fabrication (MD) utilisables par la machine de fabrication additive (10) mettant en œuvre ledit procédé de fabrication additive, lesdites données de fabrication (MD) comprenant des données définissant un nombre et une taille de couches, et des données définissant un matériau utilisé ;
- l'envoi des données de fabrication (MD) à la machine de fabrication additive (10) ;
- l'estimation (S8) d'un pouvoir réfractif effectif de la lentille optique par une technique de tracé de rayons et un modèle de la lentille défini par lesdites données définissant le nombre et la taille des couches, et lesdites données définissant le matériau utilisé ;
- la comparaison (S8) du pouvoir réfractif effectif estimé avec un pouvoir réfractif défini dans les données optiques ; et
- la fabrication (S10) de la lentille optique au moyen de ladite machine de fabrication additive (10) en utilisant lesdites données de fabrication.

2. Procédé selon la revendication 1, dans lequel les données de procédé (PD) définissent un matériau utilisé pendant ledit procédé de fabrication additive.

3. Procédé selon l'une quelconque des revendications 1 à 2, dans lequel lesdites données optiques (OD) comprennent des données de prescription définissant au moins une réfraction fournie par la lentille optique.

4. Procédé selon l'une quelconque des revendications 1 à 3, dans lequel lesdites données optiques (OD) comprennent des données définissant un type de la lentille optique.

5. Procédé selon l'une quelconque des revendications 1 à 4, dans lequel lesdites données de fabrication comprennent des données utilisables par la machine de fabrication additive pour produire la lentille optique.

6. Procédé selon l'une quelconque des revendications 1 à 4, dans lequel lesdites données de fabrication comprennent des données utilisables pour vérifier au moins un paramètre de la lentille optique fabriquée.

7. Procédé selon l'une quelconque des revendications 1 à 6, comprenant une étape de stockage des données optiques (OD) et des données de fabrication (MD) dans un ensemble unique de données.

8. Procédé selon l'une quelconque des revendications 1 à 7, dans lequel l'étape de détermination de données de fabrication comprend les sous-étapes suivantes :
- la détermination d'une géométrie de ladite lentille optique sur la base desdites données optiques (OD) ;
- la détermination desdites données de fabrication (MD) sur la base de ladite géométrie et desdites données de procédé (PD).

9. Procédé selon l'une quelconque des revendications 1 à 7, dans lequel l'étape de détermination de données de fabrication (MD) comprend une sous-étape de récupération d'au moins une partie desdites données de fabrication (MD) dans une base de données associant ladite partie de données de fabrication (MD) auxdites données optiques (OD) et auxdites données de procédé (PD).

10. Procédé selon l'une quelconque des revendications 1 à 9, comprenant en outre une étape de réception de données de monture (FD) représentant une forme d'une monture pour porter la lentille optique, dans lequel lesdites données de fabrication (MD) sont déterminées en partie sur la base desdites données de monture (FD).

11. Procédé selon la revendication 10 prise comme dépendante de la revendication 8, dans lequel la géométrie de ladite lentille optique est déterminée sur la base desdites données optiques (OD) et desdites données de monture (FD).

12. Système de fabrication d'une lentille optique, comprenant :
- un circuit de communication (4) pour recevoir des données optiques (OD) représentant au moins une caractéristique d'une correction optique apportée par la lentille optique, et pour recevoir en provenance d'une machine de fabrication additive (10) des données de procédé (PD) représentant au moins une caractéristique d'un procédé de fabrication additive utilisé pour fabriquer la lentille optique, les données de procédé (PD) définissant au moins la machine de fabrication additive (10) intervenant dans ledit procédé de fabrication additive ;
- au moins une unité de traitement (6) conçue pour déterminer des données de fabrication (MD) sur la base desdites données optiques (OD) et desdites données de procédé (PD), dans lequel le circuit de communication (4) est configuré pour envoyer les données de fabrication (MD) à la machine de fabrication additive (10), lesdites données de fabrication (MD) comprenant des données définissant un nombre et une taille de couches, et des données définissant un matériau utilisé ; et
- la machine de fabrication additive (10) conçue pour utiliser lesdites données de fabrication pour fabriquer la lentille optique au moyen dudit procédé de fabrication additive ;
l'unité de traitement (6) ou la machine de fabrication additive (10) étant conçue pour exécuter les étapes suivantes :
- l'estimation d'un pouvoir réfractif effectif de la lentille optique par une technique de tracé de rayons et un modèle de la lentille défini par lesdites données définissant le nombre et la taille des couches, et lesdites données définissant le matériau utilisé ;
- la comparaison du pouvoir réfractif effectif estimé avec un pouvoir réfractif défini dans les données optiques.
